(19) 
Europäisches Patentamt
European Patent Office
Office européen des brevets

(11) **EP 3 564 864 A1**

(12) **EUROPEAN PATENT APPLICATION**
published in accordance with Art. 153(4) EPC

(43) Date of publication:
**06.11.2019 Bulletin 2019/45**

(51) Int Cl.:
***G06N 3/06*** (2006.01)        ***H04N 7/24*** (2011.01)

(21) Application number: **17889129.7**

(22) Date of filing: **28.12.2017**

(86) International application number:
**PCT/CN2017/119364**

(87) International publication number:
**WO 2018/121670 (05.07.2018 Gazette 2018/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **30.12.2016 CN 201611270091**

(71) Applicant: **Shanghai Cambricon Information Technology Co., Ltd Beijing 100191 (CN)**

(72) Inventors:
• **CHEN, Tianshi**
  **Shanghai 201203 (CN)**
• **LUO, Yuzhe**
  **Shanghai 201203 (CN)**
• **GUO, Qi**
  **Shanghai 201203 (CN)**
• **LIU, Shaoli**
  **Shanghai 201203 (CN)**
• **CHEN, Yunji**
  **Shanghai 201203 (CN)**

(74) Representative: **AWA Sweden AB**
**P.O. Box 5117**
**200 71 Malmö (SE)**

(54) **DEVICES FOR COMPRESSION/DECOMPRESSION, SYSTEM, CHIP, AND ELECTRONIC DEVICE**

(57)    This disclosure provides an apparatus and system for compression/decompression of neural network data, a chip, a chip package structure, a board card, and an electronic apparatus. The compression apparatus comprises a model conversion module and a data encoding module connected to the model conversion module. The decompression apparatus comprises a data decoding module and a model conversion module connected to the data decoding module. The system comprises the compression apparatus and the decompression apparatus. This disclosure makes it possible to compress/decompress neural network data at a high compression ratio, thereby greatly reducing the storage space of the neural network model and alleviating the pressure on transmission thereof.

Fig.1

EP 3 564 864 A1

**Description**

**TECHNICAL FIELD**

This disclosure relates to the technical field of artificial neural networks, and in particular to an apparatus and system for compression/decompression of neural network data, a chip, and an electronic apparatus.

**BACKGROUND**

Artificial neural networks (ANNs), also known as neural networks (NNs) for short, is an algorithmic mathematical model that imitates behavioral characteristics of animal neural networks and carries out distributed, parallel information processing. This kind of network relies on the complexity of a system and achieves the purpose of processing information by adjusting connections between nodes in the network.

At present, neural networks have made great progress in many fields such as intelligent control and machine learning. With the rise of Learning in Depth, neural networks have once again become a hot topic in the field of artificial intelligence. With the extensive combination of big data and Learning in Depth, the scale of neural networks has become increasingly large. Researchers from Google put forward the concept of "Large-Scale Deep Learning", hoping to use Google as a platform to integrate global information to build an intelligent computer system.

As Learning-in-Depth techniques develop, the scale of the current neural network model is getting larger and larger, which imposes growing demands on storage performance and memory access bandwidth. Without compression, not only do neural networks require a considerable amount of storage space, they also need high memory access bandwidth. Compressing neural networks, as a new technical concept, becomes necessary in the context of a growing neural network scale.

**SUMMARY**

(I) Problems to be solved

In view of the above technical problems, this disclosure provides an apparatus and system for compression/decompression of neural network data, a chip, and an electronic apparatus, in order to reduce the storage space and alleviate the pressure on memory access bandwidth.

(II) Solutions

According to one aspect of this disclosure, there is provided a compression apparatus for neural network data. The compression apparatus comprises: a model conversion module 120 configured to convert neural network numerical data into video-like data; and a data encoding module 131 configured to be connected to the model conversion module 120 and obtain a compression result by encoding the video-like data using a video encoding method.

In some embodiments of this disclosure, in the compression apparatus of this disclosure, the video-like data refers to a series of integers within a preset range which are obtained by subjecting the initial neural network numerical data to conversion performed by the model conversion module, which correspond to the representation of all the pixels, and which together constitute data of the corresponding video.

In some embodiments of this disclosure, in the compression apparatus of this disclosure, the model conversion module 120 converts the neural network numerical data into video-like data in one of the following two ways:

The first way is that a data range of the neural network numerical data is determined to be [-b, a], wherein a is a positive integer greater than or equal to the maximum value of the entire neural network numerical data, and -b is a negative integer less than or equal to the minimum value of the entire neural network model data.

The model conversion module 120 performs conversion according to the following formula:

$$I = \left\lceil \frac{(2^t - 1) \times (w + b)}{a + b} \right\rceil,$$

wherein $I$ is an integer within the interval $[0, (2^t-1)]$, i.e., the representation of one pixel, $w$ is the real data value of the neural network numerical data in the range of [-*b, a*], *a* and *b* are both positive integers, and *t* is a positive integer.

Because neural network numerical data has spatial local similarity, that is, spatially similar neurons may be similar to weight connections, are similar to pixels of a video, and have inter-frame similarity, it is possible to compress the neural network in a video compression way.

The second way is that for convolution neural network numerical data, the model conversion module 120 converts the weight and offset of each of convolution kernels in the convolution neural network numerical data and integrates integers obtained from the conversion of the weights and offsets to obtain data of a corresponding video frame, and then video-like data is obtained by combining video frame-like data obtained from the weights and offsets of the convolution kernels.

The convolution neural network numerical data refers to neural network numerical data of convolution neural networks.

The term "integrate" refers to that when all the video frame-like data is converted into convolution kernel data, information of the convolution kernel of the whole convolution neural network is obtained. The information can be stored in a linked list or other data structures.

In some embodiments of this disclosure, the data encoding module 131 includes: an encoding submodule configured to obtain a data encoding result by encoding the video-like data using a video encoding method; and an integration submodule configured to obtain a compression result by integrating the data encoding result and encoding process information.

In some embodiments of this disclosure, the encoding submodule includes: a prediction unit 130a configured to perform predictive encoding using correlation between adjacent data of the video-like data; a transformation unit 130b configured to perform orthogonal transformation encoding on the video-like data processed by the prediction unit to compress the data; a quantization unit 130c configured to perform quantization encoding on the video-like data processed by the transformation unit and reduce the encoding length of the data without reducing the quality of the data; and an entropy encoding unit 130d configured to perform code rate compression encoding on the video-like data processed by the quantization unit using statistical characteristics of the data to reduce data redundancy.

In some embodiments of this disclosure, the prediction unit 130a, transformation unit 130b, quantization unit 130c, and entropy encoding unit 130d share one data buffering unit or correspond respectively to a data buffering unit.

In some embodiments of this disclosure, the encoding submodule includes a depth automatic codec unit 130e configured to further encode the video-like data output from the model conversion module and use outputs of a hidden layer as the encoding result. The depth automatic codec unit 130e trains the video-like data as a training input and an ideal output using a method of minimizing reconstruction errors so that the output becomes substantially the same as the input video-like data.

In the depth automatic codec unit, the output is expected to be the same as the input, so the output can be regarded as the reconstruction of the input. In fact, the output and input are different in the reconstruction errors. Minimizing the reconstruction errors through training is to minimize the reconstruction errors as mentioned above. Herein, there is no strict criterion for determining whether they are "substantially the same", but they can only be said to be similar.

In some embodiments of this disclosure, the compression apparatus further comprises a structural information encoding module configured to obtain neural network structural data by encoding neural network structural information.

In some embodiments of this disclosure, the neural network numerical data includes weight data and offset data of the neural network.

In some embodiments of this disclosure, the neural network structural information includes the way of connection between neurons, the number of intra-layer neurons, and the type of the activation function. The structural information encoding module encodes the neural network structural information in the following manner so as to obtain an index structure with the layer numbers as index numbers, and the type number of the neuron activation function and the adjacent matrix as an index result, i.e., the neural network structural data: recording the number of intralayer neurons in each layer of the neural network; encoding the type of the activation function; and representing the connection relationship of neurons between adjacent layers by an adjacent matrix.

In some embodiments of this disclosure, the compression apparatus of this disclosure further comprises a data buffering module 140 configured to buffer the neural network numerical data; and a controller module 110 configured to be connected to the data buffering module 140, the model conversion module 120 and the data encoding module 131 and transmit them control commands to perform the following operations:

transmitting a data reading command, to the data buffering module 140, which causes the data buffering module 140 to request the neural network numerical data from the outside and buffer it;
transmitting a data reading command, to the model conversion module 120, which causes the model conversion module 120 to read the neural network numerical data from the data buffering module 140;
transmitting a data conversion command, to the model conversion module 120, which causes the model conversion module 120 to convert the read neural network numerical data into video-like data;

transmitting a data reading command, to the data buffering module 140, which causes the data buffering module 140 to request the video-like data from the model conversion module 120 and buffer it;

transmitting a data reading command, to the data encoding module 131, which causes the data encoding module 131 to read the video-like data from the data buffering module 140;

transmitting a data encoding command, to the data encoding module 131, that contains encoding method information and causes the data encoding module 131 to encode the video-like data by making use of corresponding units employing the encoding method, thus obtaining a data encoding result;

transmitting an integration command, to the data encoding module 131, which causes the data encoding module 131 to integrate the data encoding result with encoding process information to obtain a compression result; and

transmitting a data buffering command, to the data buffering module 140, which causes the data buffering module 140 to obtain the compression result from the data encoding module 131 and buffer it.

According to another aspect of this disclosure, there is further provided a decompression apparatus for neural network data. The decompression apparatus comprises: a data decoding module 132 configured to obtain a compression result and decode the compression result using a video decoding method corresponding to the compression result; and a model conversion module 120 configured to be connected to the data decoding module 132 and restore neural network numerical data from the decoded video-like data.

In some embodiments of this disclosure, in the decompression apparatus of this disclosure, the data decoding module 132 includes a disintegration submodule configured to disintegrate the compression result into a data encoding result and encoding process information; and a decoding submodule configured to extract encoding method information from the encoding process information and decode the data encoding result using a decoding method corresponding to the encoding method information, thus obtaining video-like data.

In some embodiments of this disclosure, the model conversion module restores neural network numerical data from the decoded video-like data in one of the following two ways:

The first way is that a data range of the neural network numerical data is determined to be [-b, a], wherein a is a positive integer greater than or equal to the maximum value of the entire neural network numerical data, and -b is a negative integer less than or equal to the minimum value of the entire neural network model data.

The model conversion module 120 restores neural network numerical data according to the following formula:

$$W = \frac{(a + b) \times I}{2^t - 1} - b,$$

W is a restored data value of the neural network numerical data which exists in the range of [-b, a] before the conversion performed by the conversion module of the compression apparatus, I is video-like data, which is an integer within the interval $[0, (2^t-1)]$, and t is a positive integer.

It is understandable that the neural network numerical data herein actually refers to the previous compressed neural network numerical data, and because the range before the compression is [-b, a], so the decompressed neural network numerical data is also in this interval.

The second way is that for convolution neural network numerical data, the model conversion module 120 converts data of corresponding video frames in the video-like data by converting each frame into the weight and offset of one of convolution kernels of the convolution neural network, and integrates the converted data of all the frames to obtain overall information of the weight and offset of each convolution kernels of the convolution neural network, thereby restoring the neural network numerical data.

The convolution neural network numerical data refers to the neural network numerical data of the convolution neural network.

The term "integrate" refers to that when each data similar to a video frame is converted into convolution kernel data, information of the convolution kernel of the whole convolution neural network is obtained. The information can be stored in a linked list or other data structures.

In some embodiments of this disclosure, the decompression apparatus further comprises a neural network restoration module configured to decode neural network structural data to obtain neural network structural information and restore the neural network using the neural network structural information and the restored neural network numerical data.

In some embodiments of this disclosure, the neural network numerical data are weight data and offset data of the neural network.

In some embodiments of this disclosure, the neural network structural information includes the way of connection between neurons, the number of intra-layer neurons, and the type of the activation function. The neural network structural data is data resulting from encoding the neural network structural information.

The neural network numerical data is weight data and offset data of the neural network. Alternatively, the decompression apparatus further comprises a non-numerical data decoding module configured to decode the neural network numerical data to obtain corresponding neural network non-numerical data, wherein the neural network non-numerical data is one or more of data of the way of connection between neurons and layer data.

In some embodiments of this disclosure, the decompression apparatus of this disclosure further comprises a data buffering module 140 configured to buffer a compression result; and a controller module 110 configured to be connected to the model conversion module 120, the data decoding module 132 and the data buffering module 140 and transmit them control commands to perform the following operations:

transmitting a data reading command, to the data buffering module 140, which causes the data buffering module 140 to request the compression result from the outside and buffer it;

transmitting a data reading command, to the data decoding module 132, which causes the data decoding module 132 to read the compression result from the data buffering module 140;

transmitting a disintegration command, to the data decoding module 132, which causes the data decoding module 132 to decode the compression result to obtain encoding process information and a data compression result;

transmitting a data reading command, to the data decoding module 132, which causes the data decoding module 132 to read the encoding process information;

selecting a decoding command according to the encoding process information;

transmitting a decoding command, to the data encoding and decoding module 132, which causes the data encoding and decoding module 132 to decompress the data compression result to obtain video-like data;

transmitting a data reading command, to the data buffering module 140, which causes the data buffering module 140 to read the video-like data from the data decoding module 132 and buffer it;

transmitting a data reading command, to the model conversion module 120, which causes the model conversion module 120 to read the video-like data from the data buffering module 140; and

transmitting a data conversion command, to the model conversion module 120, which causes the model conversion module 120 to convert the video-like data into neural network numerical data.

According to still another aspect of this disclosure, there is further provided a system for compression/decompression of neural network data. The system comprises a compression apparatus which is the compression apparatus described above; and a decompression apparatus which is the decompression apparatus described above.

In some embodiments of this disclosure, the compression apparatus and decompression apparatus share the data buffering module 140, the controller module 110, and the model conversion module 120.

According to still another aspect of this disclosure, there is also provided a chip comprising: such a compression apparatus as described above; and/or such a decompression apparatus as described above; and/or such a compression/decompression system as described above.

In some embodiments of this disclosure, for the compression apparatus or the compression apparatus in the system, the chip comprises a storage unit, and the compression apparatus is arranged outside the storage unit and configured to compress neural network data transmitted into the storage unit; the chip comprises an input port, and the compression apparatus is arranged outside the input port and configured to compress input neural network data; or the chip comprises a data transmitting end, and the compression apparatus is arranged at the data transmitting end and configured to compress neural network data to be sent.

In some embodiments of this disclosure, for the decompression apparatus or the decompression apparatus in the system, the chip comprises a storage unit, and the decompression apparatus is arranged outside the storage unit and configured to decompress compressed neural network data that is read out from the storage unit; the chip comprises an output port, and the decompression apparatus is arranged outside the output port and configured to decompress input compressed neural network data; or the chip comprises a data receiving end, and the decompression apparatus is arranged at the data receiving end and configured to decompress received compressed neural network data.

According to yet another aspect of this disclosure, there is also provided an electronic apparatus comprising such a chip as described above.

In some embodiments of this disclosure, the electronic apparatus includes a data processing apparatus, a robot, a computer, a printer, a scanner, a tablet computer, an intelligent terminal, a mobile phone, a vehicle traveling data recorder, a navigator, a sensor, a camera, a cloud server, a camera, a video camera, a projector, a watch, an earphone, a mobile storage, a wearable device, transportation means, a household appliance, and/or a medical device.

In some embodiments of this disclosure, the transportation means includes an airplane, a ship, and/or a vehicle. The household appliance includes a TV set, an air conditioner, a microwave oven, a refrigerator, an electric cooker, a humidifier, a washing machine, an electric lamp, a gas stove and a kitchen ventilator. The medical device includes a nuclear magnetic resonance instrument, a B-type ultrasonic instrument, and/or an electrocardiogram instrument.

(III) Beneficial effects

From the above technical solutions, it can be seen that the disclosed apparatus and system for compression/decompression of neural network data, chip and electronic apparatus have at least one of the following beneficial effects:

(1) a high compression ratio, resulting from using a video encoding and decoding method to compress/decompress neural network data, which reduces the storage space for a neural network model and alleviates the pressure on transmission thereof;
(2) a greatly accelerated compression/decompression process, resulting from integrating various compression or decompression algorithms in the data compression/decompression module; and
(3) greatly increased flexibility and practicability of apparatuses and support for the emerging technique of using deep neural network in compression and decompression, resulting from that fact that dedicated data buffering module and controller module serve various dedicated modules for video encoding and decoding and support the combination of various video encoding and decoding techniques.

In summary, this disclosure makes it possible to efficiently compress and decompress a large-scale neural network model, thereby greatly reducing the storage space of the neural network model and alleviating the pressure on transmission thereof. That is in line with the increasingly enlarging scale of neural networks, a trend in the era of "big data".

BRIEF DESCRIPTION OF THE DRAWINGS

Fig. 1 is a schematic diagram that shows the structure of a compression apparatus for compressing neural network data according to a first embodiment of this disclosure.
Fig. 2 is a schematic diagram that shows the structure of a data encoding module in the compression apparatus shown in Fig. 1.
Fig. 3 is a flowchart of how a controller module in the compression apparatus shown in Fig. 1 transmits control commands for operations to be performed.
Fig. 4 is a schematic diagram that shows the structure of a decompression apparatus for decompressing a compression result of neural network data according to a second embodiment of this disclosure.
Fig. 5 is a schematic diagram that shows the structure of a data decoding module in the decompression apparatus shown in Fig. 4.

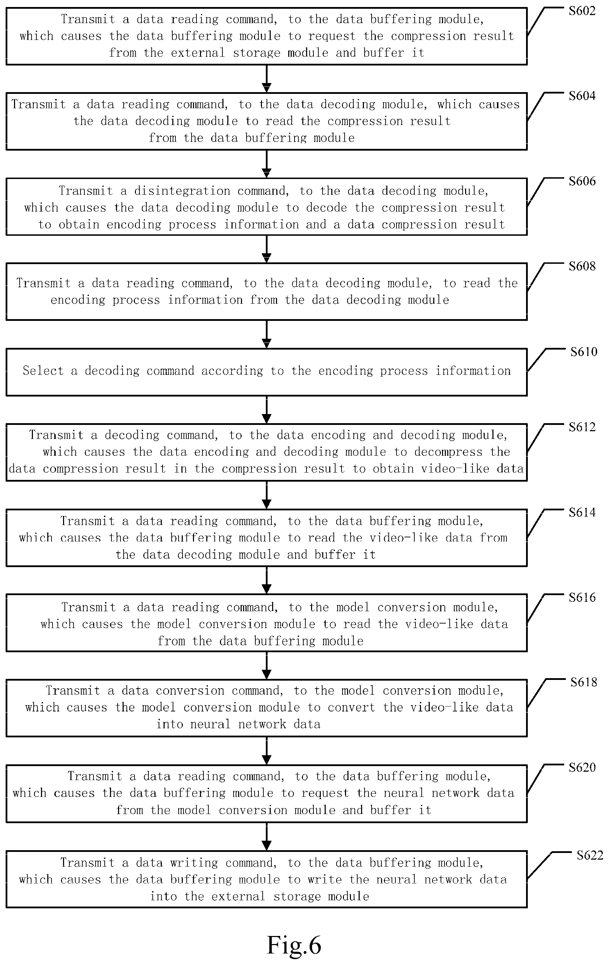

Fig. 6 is a flowchart of how a controller module in the decompression apparatus shown in Fig. 4 transmits control commands to perform the operations.
Fig. 7 is a schematic diagram that shows the structure of a compression/decompression system for a compression result of neural network data according to a third embodiment of this disclosure.
Fig. 8 is a schematic diagram that shows the compression process and decompression process in the compression/decompression system shown in Fig. 7.
Fig. 9 is a schematic diagram that shows the structure of a second embodiment of a compression apparatus according to this disclosure.
Fig. 10 is a schematic diagram that shows the structure of a second embodiment of a decompression apparatus according to this disclosure.

[Description of numeral signs of main elements]

110, 110' - controller module;
120, 120' - model conversion module;
140, 140' - data buffering module;
130 - data encoding/decoding module;
131 - data encoding module; 131a - integration submodule;
132 - data decoding module; 132a - disintegration submodule;
130a - prediction unit; 130b - transformation unit; 130c - quantization unit;
130d - entropy encoding unit; 130d' - entropy decoding unit;

130e - depth automatic codec unit;
133 - structural information encoding module;
134 - neural network restoration module;
200 - external storage module

## DETAILED DESCRIPTION

The video encoding and decoding technology has fully grown. The traditional video encoding and decoding technology uses prediction, transformation, entropy encoding and other techniques. After the rise of Learning in Depth, the use of deep neural networks for video encoding and decoding has become a new research hotspot.

Broadly speaking, neural network data refers to an aggregation of neural network information, including neural network numerical data and neural network structural information.

The neural network numerical data includes weight data and offset data of neurons, which are actually numerical data. After a careful study and comparison, the inventor has found that neural network numerical data bears local correlation, like pixels of a video image. Thus, it would be a feasible technical route to compress a neural network model by using a video encoding and decoding method to encode and decode the neural network model.

The neural network structural information includes the way of connection between neurons, the number of neurons, and the type of the activation function. The neural network structural information can also be expressed numerically after being encoded.

In order to make the object, technical solution and advantages of this disclosure clearer, this disclosure will be described in more detail below with reference to specific embodiments and the drawings.

I. First embodiment of compression apparatus

In a first exemplary embodiment of this disclosure, a compression apparatus for compressing neural network data is provided. In an actual system environment, the compression apparatus can be installed around a storage unit to compress neural network data transmitted into the storage unit. It can also be arranged around an input port to compress input neural network data. The compression apparatus can also be arranged at a data transmitting end to compress data to be transmitted.

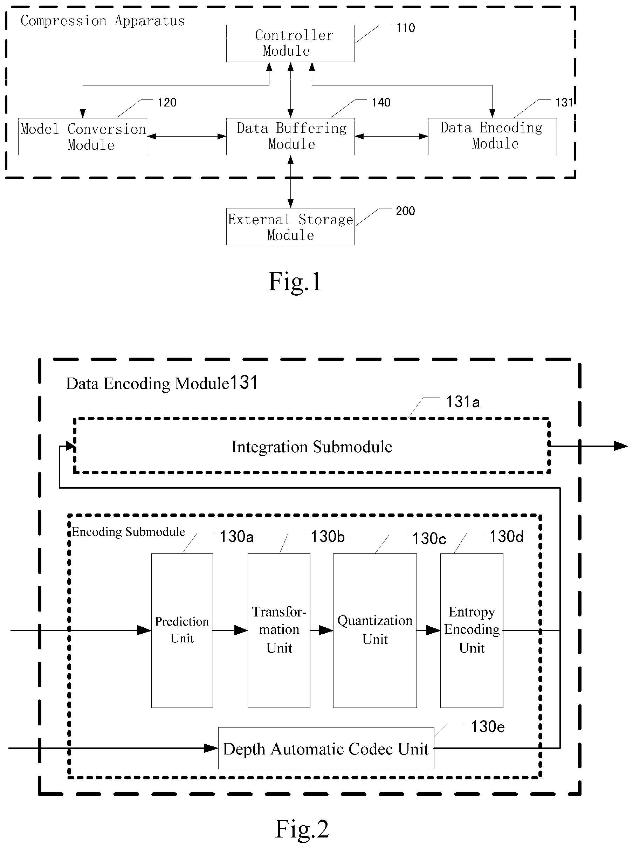

In this embodiment, the neural network data includes neural network numerical data, that is, weight data and offset data of neurons. As shown in fig. 1, the compression apparatus for compressing neural network numerical data in this embodiment includes a controller module 110, a model conversion module 120, a data encoding module 131, and a data buffering module 140.

In this embodiment, the data buffering module 140 is configured to buffer neural network numerical data obtained by an external storage module 200. The model conversion module 120 is connected to the data buffering module 140 and configured to convert the neural network numerical data into video-like data. The data encoding module 131 is connected to the model conversion module 120 and configured to encode the video-like data using a video encoding method. The controller module 110 is connected to the model conversion module 120, the data encoding module 131, and the data buffering module 140 and configured to transmit to them control commands which allow them to cooperate.

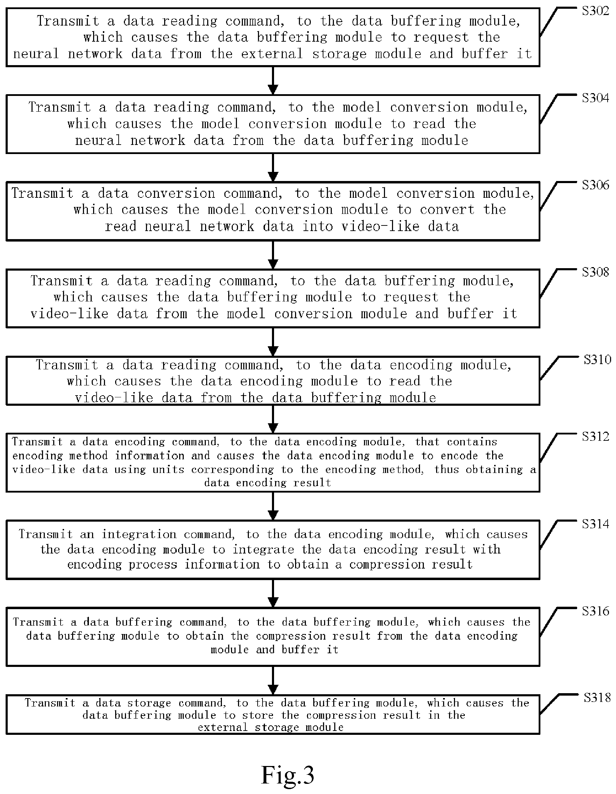

As shown in Fig. 3, in this embodiment, the controller module 110 transmits control commands to perform the following operations:
Step S302 of transmitting a data reading command, to the data buffering module 140, which causes the data buffering module 140 to request the neural network numerical data from the external storage module 200 and buffer it.

Because neural network numerical data has spatial local similarity, that is, spatially similar neurons may be similar to weight connections, are similar to pixels of a video, and have inter-frame similarity, it is possible to compress the neural network in a video compression way.

Step S304 of transmitting a data reading command, to the model conversion module 120, which causes the model conversion module 120 to read the neural network numerical data from the data buffering module 140; and
Step S306 of transmitting a data conversion command, to the model conversion module 120, which causes the model conversion module 120 to convert the read neural network numerical data into video-like data.

The video-like data herein refers to an integration constituted by a series of integers within a preset range (e.g., the interval [0, 255]) which are obtained by subjecting the initial neural network numerical data to conversion performed by the model conversion module, and which correspond to the representation of all the pixels. The following is an explanation of how to obtain video-like data, which takes two types of neural network numerical data as examples.

(1) A data range of the neural network numerical data is determined to be [-b, a], wherein a is a positive integer greater than or equal to the maximum value of the entire neural network numerical data, and -b is a negative integer less than or equal to the minimum value of the entire neural network model data.

The neural network numerical data is converted into integers ranging from 0 to 255 (corresponding to 8bpp at this point). The model conversion module can follow this formula:

$$I = \left\lceil \frac{255(w+b)}{a+b} \right\rceil \tag{1},$$

wherein I is an integer within the interval [0, 255], i.e., the representation of one pixel; and w is the real data value of the neural network numerical data in the range of [-b, a]. 8bpp indicates that the pixel depth is 8, that is, each point of pixel is represented by 8-bit data. In this case, a pixel can have 256 (i.e., $2^8$) colors.

Those skilled in the art should be able to understand that "255" in the above formula corresponds to a case where the pixel depth is 8, and originates from "$2^8-1$". And in a case where the pixel depth is t, "255" in the above formula should be replaced by "$2^t-1$", where t is a positive integer.

(2) E.g., neural network numerical data includes convolution neural network numerical data. For convolution neural network numerical data, the model conversion module 120 converts the weight and offset of each of convolution kernels in the convolution neural network numerical data and integrates integers obtained from the conversion of the weight and offset to obtain data of a corresponding video frame, and then video-like data is obtained by combining the video frame-like data obtained from the weights and offsets of the convolution kernels.

The convolution neural network numerical data refers to neural network numerical data of convolution neural networks.

The term "integrate" refers to that when all data similar to video frames is converted into convolution kernel data, information of the convolution kernel of the whole convolution neural network is obtained. The information can be stored in a linked list or other data structures.

Step S308 of transmitting a data reading command, to the data buffering module 140, which causes the data buffering module 140 to request the video-like data from the model conversion module 120 and buffer it;

Step S310 of transmitting a data reading command, to the data encoding module 131, which causes the data encoding module 131 to read the video-like data from the data buffering module 140; and

Step S312 of transmitting a data encoding command, to the data encoding module 131, that contains encoding method information and causes the data encoding module 131 to encode the video-like data by making use of corresponding units employing the encoding method, thus obtaining a data encoding result.

As shown in Fig. 2, in this embodiment, the data encoding module 131 includes an encoding submodule configured to obtain a data encoding result by encoding the video-like data using a video encoding method; and an integration submodule 131a configured to obtain a compression result by integrating the data encoding result and encoding process information. The encoding submodule further includes: a prediction unit 130a; a transformation unit 130b; a quantization unit 130c; an entropy encoding unit 130d; and a depth automatic codec unit 130e.

In a first encoding method,

(1) The prediction unit 130a performs predictive encoding using correlation between adjacent data of the video-like data (the converted neural network numerical data). The term "adjacent" herein means being spatially close to each other.

The predictive encoding refers to predictive encoding based on intra-frame and inter-frame similarity of video-like data. For example, if there are three consecutive video frames and the second frame is removed, then the second frame can still be predicted from the similarity between the first and third frames and the second frame; or if the third frame is removed, then the third frame can be predicted based on the first and second frames. Thus, only information of two of the three frames instead of that of the three frames needs to be stored.

In this embodiment, the weights of the neural network are predicted from the similarity between the weights of neural network units corresponding to different convolution kernels, and then differences between the predicted values and the actual values are encoded to achieve the purpose of compression. The video-like data undergoing the predictive encoding and the original video-like data has the same expression form.

(2) The transformation unit 130b performs orthogonal transformation encoding on the video-like data processed by the prediction unit 130a to compress the data.

For example, when two-dimensional discrete cosine transform (DCT) is performed on the video-like data, suppose that $f(m, n)$ is $N \times N$ discrete video-like data. Then, the DCT is expressed as:

$$F(u,v) = \frac{2}{N} c(u)c(v) \sum_{m=0}^{N-1} \sum_{n=0}^{N-1} f(m,n) \cos\left[\frac{\pi}{2N}(2m+1)u\right] \cos\left[\frac{\pi}{2N}(2n+1)v\right] \qquad (2\text{-}1),$$

wherein $u$, $v$=0, 1, ..., N-1; when $u$=0 ($v$=0), $c(u) = 1/\sqrt{2}$ ($c(v) = 1/\sqrt{2}$); when $u$=1,2,......, N-1($v$=1,2,......, N-1), $c(u)$=1($c(v)$=1); $f(m, n)$ is a value at the position $(m, n)$ in the matrix before the encoding, $F(u, v)$ is a value at the position $(u, v)$ in the matrix after the encoding.

(3) The quantization unit 130c performs quantization encoding on the video-like data processed by the transformation unit and reduces the encoding length of the data without reducing the quality of the data.

For example, when the scalar quantization technology is used, the data is processed as follows:

$$FQ(u,v) = round\left(\frac{F(u,v)}{Q_{step}}\right) \qquad (3\text{-}1),$$

wherein, $F(u, v)$ is the data $(u,v=0,1,\cdots\cdots,N\text{-}1)$ at any position in the video-like data processed by the transformation unit; $Q_{step}$ is the quantization step, which is a parameter set by the user in accordance with the experience and scenario while taking into account the compression ratio and the degree of data restoration; $FQ(u, v)$ is the quantization value of $F(u, v)$; and $round\,()$ is a rounding function (that is, its output is an integer closest to the input real number).

(4) The entropy encoding unit 130d performs code rate compression encoding (such as Huffman encoding and arithmetic encoding) on the video-like data processed by the quantization unit using statistical characteristics of the data.

For example, when Huffman encoding is carried out, binary codes with a short word length are assigned to symbols with high probability of occurrence, and binary codes with a long word length are assigned to symbols with low probability of occurrence, so that codes with the shortest average code length can be obtained.

Generally speaking, this encoding method includes prediction, transformation, quantization and entropy encoding. In the data encoding module 131, the video-like data sequentially passes through the prediction unit 130a, the transformation unit 130b, the quantization unit 130c and the entropy encoding unit 130d, and the output from a previous module is the input of the succeeding module. For example, a group of video data, after passing through the prediction unit 130a, becomes an encoding result which is the difference between the predicted value and the actual value. After entering the transformation unit 130b, it is further compressed through a two-dimensional DCT transformation, and then enters the quantization unit 130c, in which its encoding length is shortened. Finally, after it is subjected to Huffman encoding by the entropy encoding unit 130d, the encoding redundancy is reduced. As a result, a good compression effect is achieved.

Those skilled in the art should be able to understand that in the first encoding method, the prediction unit 130a, the transformation unit 130b, the quantization unit 130c, and the entropy encoding unit 130d share one data buffering unit or correspond respectively to a data buffering unit.

It should be noted that although the video-like data in this embodiment sequentially passes through the prediction unit 130a, the transformation unit 130b, the quantization unit 130c, and the entropy encoding unit 130d, this disclosure is not limited thereto, and in other encoding methods, it may also pass through other necessary units and modules. Those skilled in the art should be clear about how to set them in a specific coding method, so no detail is given herein. In the second encoding method, the depth automatic codec unit 130e encodes the data by making use of the working principle of a depth automatic encoder.

The working principle of the depth automatic codec unit is that the output from the encoder is the encoding result, and the encoder training uses the method of minimizing reconstruction errors, as described below.

The depth automatic codec unit trains the video-like data as training input and ideal output by using the method of minimizing reconstruction errors, so that the output becomes substantially the same data as the input video-like data. The depth automatic codec unit uses the output of a hidden layer as an encoding result and the final output as a decoding result. Since the number of neurons in the hidden layer is less than the number of input neurons, the input data can be compressed. It should be noted that the depth automatic codec unit encodes the information at the decoding side of the depth automatic encoder and incorporates it into the encoding result for decoding.

What needs to be explained is that in the depth automatic codec unit, the output is expected to be the same as the input, so the output can be regarded as the reconstruction of the input. In fact, the output and input are different in the reconstruction errors. Minimizing the reconstruction errors through training is to minimize the reconstruction errors as mentioned above. It should be noted that one or a combination of the above encoding methods can be included in the aforementioned encoding command (in the case of combination, the sequence of the encoding methods is not specified), and other video encoding methods may also be used.

Similarly, the depth automatic codec unit may share one data buffering unit with the prediction unit (130a), the transformation unit (130b), the quantization unit (130c), and the entropy encoding unit (130d), or uses an independent data buffering unit. Either way has no influence on the implementation of this disclosure.

Specifically, the command sequence in the controller module can be determined by a program written by the user, so the neural network numerical data can be compressed using a compression method that the user hopes to use. The user can combine different coding methods by writing related programs. The controller module compiles the related programs into commands and decodes them to obtain related control commands by which to control each of the modules and the encoding process.

The details of how the encoding proceeds can be found in related descriptions of video decoding, so no more details are given herein.

It should be further explained that a process of compressing data is essentially a process of encoding the data, and thus the encoding process in the above process can be regarded as a compression process or a part of a compression process.

Step S314 of transmitting an integration command, to the data encoding module 131, which causes the data encoding module 131 to integrate the data encoding result with encoding process information to obtain a compression result.

After this step, the compression result includes two parts, one of which is the data encoding result of the neural network numerical data, and the other is the encoding process information. The encoding process information may include information of the encoding method and information of the decoding of the depth automatic encoder (if a depth automatic codec unit is used).

The information of the encoding method indicates which method is used for encoding, and it is predetermined. For example, if a field in the command is "1", a video encoding method will be used; if it is "2", a depth automatic encoder will be used; and if it is "3", a video encoding method will be used first, followed by the use of a depth automatic encoder.

Step S316 of transmitting a data buffering command, to the data buffering module 140, which causes the data buffering module 140 to obtain the compression result from the data encoding module 131 and buffer it; and

Step S318 of transmitting a data storage command, to the data buffering module 140, which causes the data buffering module 140 to store the compression result in the external storage module 200.

It should be noted that although the compression result is output to the external storage module in this embodiment, in other embodiments of this disclosure the compression result may be directly transmitted outside, or buffered in the data encoding module 131 or in the data buffering module 140. Any one of those ways can be selected in implementing this disclosure.

At this point, the compression apparatus for compressing neural network numerical data according to this embodiment has been described.

II. First embodiment of decompression apparatus

In a second exemplary embodiment of this disclosure, there is provided a decompression apparatus for decompressing a compression result of neural network data. It should be noted that for the purpose of simplicity, technical features of the compression apparatus according to the above embodiment that are applicable to this decompression apparatus will not be described but is incorporated in this part.

In an actual system environment, the decompression apparatus of the present embodiment can be installed around a storage unit to decompress compressed neural network data coming from the storage unit. It can also be arranged around an output port to decompress compressed output neural network data. The decompression apparatus can also be arranged at a data receiving end to decompress compressed received neural network data.

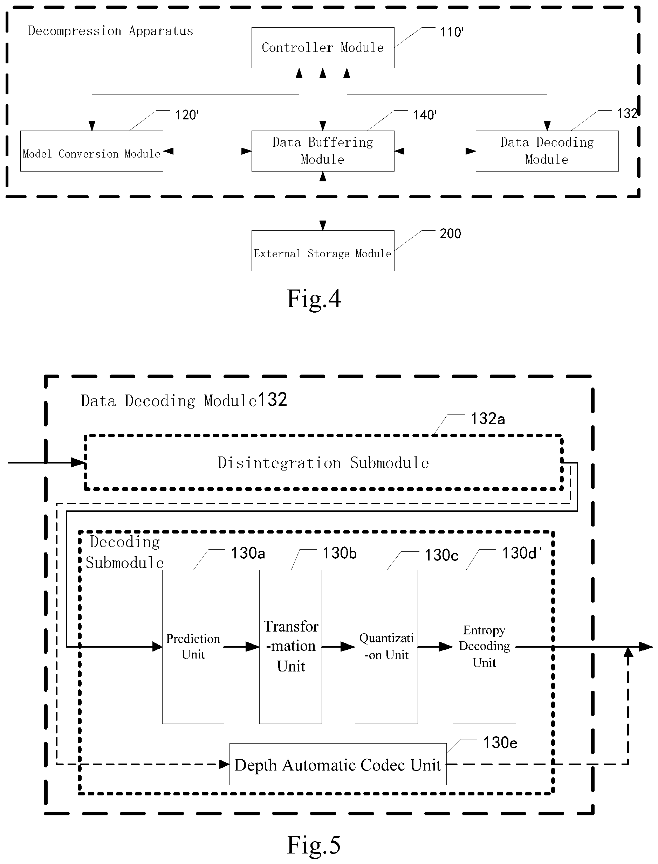

In this embodiment, the neural network data is neural network numerical data. As shown in Fig. 4, the decompression apparatus for decompressing a compression result of neural network numerical data in this embodiment is similar to the compression apparatus of the first embodiment in structure, and comprises a controller module 110', a model conversion module 120', a data decoding module 132, and a data buffering module 140'. The connection relationship between the modules in the decompression apparatus of this embodiment is similar to that of the compression apparatus of the first embodiment, and will not be described in detail herein.

The structures and functions of the controller module 110', the model conversion module 120' and the data buffering module 140' are similar to those of the corresponding modules in the compression apparatus and will not be described in detail herein.

In this embodiment, the data buffering module 140' is configured to buffer a compression result. The data decoding module 132 is connected to the model conversion module 120' and configured to decode the compression result using a video decoding method corresponding to the compression result. The model conversion module 120' is connected to the data decoding module 132 and configured to restore neural network numerical data from the decoded video-like data. The controller module 110' is connected to the model conversion module 120', the data decoding module 132 and the data buffering module 140' and configured to transmit them control commands which allow them to cooperate.

Unlike the compression apparatus of the first embodiment, operations performed by the modules in the decompression apparatus of this embodiment are the reverse of those performed by the corresponding modules in the compression apparatus of the first embodiment. Specifically, as shown in Fig. 5, in this embodiment, the controller module 110' transmits control commands to perform the following operations:

Step S602 of transmitting a data reading command, to the data buffering module 140, which causes the data buffering module 140 to request the compression result from the external storage module 200 and buffer it.

As stated above, the compression result includes two parts, one of which is a data decoding result of the neural network numerical data, and the other is encoding process information.

Step S604 of transmitting a data reading command, to the data decoding module 132, which causes the data decoding module 132 to read the compression result from the data buffering module 140;

Step S606 of transmitting a disintegration command, to the data decoding module 132, which causes the data decoding module 132 to decode the compression result to obtain encoding process information and a data compression result;

Step S608 of transmitting a data reading command, to the data decoding module 132, to read the encoding process information from the data decoding module 132; and

Step S610 of selecting a decoding command according to the encoding process information.

As stated above, the encoding process information may include information of the encoding method and information of the decoding side of the depth automatic encoder (if a depth automatic codec unit is used). Therefore, it is possible to obtain which encoding method or combination of encoding methods has been used to encode the neural network numerical data from the encoding process information and thereby to generate a corresponding decoding command. The decoding command indicates which decoding method should be used to decode the data encoding result in the compression result.

Step S612 of transmitting a decoding command, to the data encoding and decoding module 132, which causes the data encoding and decoding module 132 to decompress the data compression result in the compression result to obtain video-like data.

The data decoding module 132 includes a disintegration submodule 132a configured to disintegrate the compression result into a data encoding result and encoding process information; and a decoding submodule configured to extract encoding method information from the encoding process information and decode the data encoding result using a decoding method corresponding to the encoding method information, thus obtaining video-like data. The decoding submodule further comprises a prediction unit 130a, a transformation unit 130b, a quantization unit 130c, an entropy decoding unit 130d', and a depth automatic codec unit 130e. The operations performed by these units are the reverse of the related operations in the encoding module.

In a first decoding method (as shown by the solid lines in Fig. 5):

(1) The entropy decoding unit 130d' may perform, on the compression result, an entropy decoding process corresponding to the entropy encoding method used in encoding the data, such as a decoding process corresponding to the Huffman encoding.

(2) The quantization unit 130c performs an inverse quantization process on the compression result processed by the entropy decoding unit 130d'. For example, for data processed by the scalar quantization technology, the following inverse quantization process is performed:

$$F(u,v) = FQ(u,v) \bullet Q_{step} \qquad (3\text{-}2),$$

wherein all the parameters are the same as those in formula 3-1 and are not repeatedly described herein.

(3) The transformation unit 130b decodes the data compression result processed by the quantization unit by reversing the orthogonal transformation.

For example, the following is the reverse of formula 2-1, that is, the reverse of the two-dimensional discrete cosine transformation is performed on the $N \times N$ matrix as follows:

$$f(m,n) = \frac{2}{N} \sum_{u=0}^{N-1} \sum_{v=0}^{N-1} c(u)c(v)F(u,v)\cos\left[\frac{\pi}{2N}(2m+1)u\right]\cos\left[\frac{\pi}{2N}(2n+1)v\right]$$

$$(2\text{-}2),$$

wherein all the parameters are the same as those in formula 2-1 and are not repeatedly described herein.

(4) The prediction unit 130a decodes the compression result processed by the transformation unit using the correlation between adjacent data in the original neural network numerical data.

For example, the prediction unit 130a may add the prediction value to the related difference value to restore the original value.

In a second decoding method, the depth automatic codec unit 130e decodes the neural network numerical data encoded by the depth automatic encoder (as shown by the broken lines in Fig. 5).

For example, in the decoding process, the depth automatic codec unit 130e first decodes the input data to obtain decoding side information of the depth automatic encoder used in the encoding, constructs a decoder using the decoding side information, and then decodes the neural network numerical data encoded by the depth automatic encoder using the decoder.

In the first embodiment, one encoding method, or a combination of two or more encoding methods can be included in the encoding command. According to the first embodiment, if data input into the data decoding module 132 has been encoded using two or more encoding methods, the data decoding module 132 will decode the data by sequentially using corresponding decoding methods.

For example, when the encoding method used for the data input into the data decoding module 132 includes prediction, transformation, quantization, and Huffman encoding, the encoded data will sequentially pass through the entropy encoding module 130d', the quantization module 130c, the transformation module 130b, and the prediction module 130a. And the output of a previous module is the input of the succeeding module. For example, a group of compressed neural network numerical data input into the data encoding and decoding module enters the entropy decoding module 130d' and is subjected to a decoding process corresponding to the Huffman encoding. The decoding result enters the quantization unit 130c for inverse quantization, enters the transformation unit 130b for inverse transformation, and finally enters the prediction unit 130a, in which the predicted value is added to the related difference, thereby outputting a decoding result.

The details of how the decoding proceeds can be found in related descriptions of video decoding, so no more details are given herein.

Step S614 of transmitting a data reading command, to the data buffering module 140', which causes the data buffering module 140' to read the video-like data from the data decoding module 132 and buffer it;

Step S616 of transmitting a data reading command, to the model conversion module 120, which causes the model conversion module 120 to read the video-like data from the data buffering module 140'; and

Step S618 of transmitting a data conversion command, to the model conversion module 120, which causes the model conversion module 120 to convert the video-like data into neural network numerical data.

The conversion process is the reverse of the process performed by the model conversion module in the first embodiment.

In a first decoding method, a data range of the neural network numerical data is determined to be [-b, a], wherein a is a positive integer greater than or equal to the maximum value of the entire neural network numerical data, and -b is a negative integer less than or equal to the minimum value of the entire neural network model data.

The model conversion module 120 operates according to the following formula to restore the neural network numerical data:

$$w = \frac{(a+b) \times I}{255} - b$$

$$(4)$$

wherein $w$ is the real data value of the neural network numerical data in the range of [-b, a], and $I$ is the video-like data, an integer within the interval [0, 255].

Similarly, formula (4) applies to a case where the pixel depth is 8. When the pixel depth is t, "255" in the above formula should be replaced by "$2^t$-1", where t is a positive integer.

In a second decoding method, for convolution neural network numerical data, the model conversion module 120 converts data of corresponding video frames in the video-like data by converting each frame into the weight and offset of a convolution kernel of the convolution neural network, and integrates the converted data of all the frames to obtain overall information of the weight and offset of each convolution kernels of the convolution neural network, thereby obtaining the restored neural network numerical data.

The convolution neural network numerical data refers to the neural network numerical data of the convolution neural network.

In the above process, when data similar to all video frames is converted into convolution kernel data, information of the convolution kernel of the whole convolution neural network is obtained. The information can be stored in a linked list or other data structures.

Step S620 of transmitting a data reading command, to the data buffering module 140', which causes the data buffering module 140' to request the neural network numerical data from the model conversion module 120 and buffer it; and

Step S622 of transmitting a data writing command, to the data buffering module 140', which causes the data buffering module 140' to write the neural network numerical data into the external storage module 200.

It should be noted that although the decoding result is output to the external storage module in this embodiment, in other embodiments of this disclosure the decoding result is either directly transmitted outside or is buffered in the model conversion module or in the data buffering module, which are all optional implementation ways of this disclosure.

Here is one more thing worthy of further explanation. The decompression process is essentially a decoding process, so the decoding process in the above process can be regarded as the decompression process or part of the decompression process.

At this point, the decompression apparatus for decompressing neural network numerical data of this embodiment has been described.

III. First embodiment of compression/decompression system

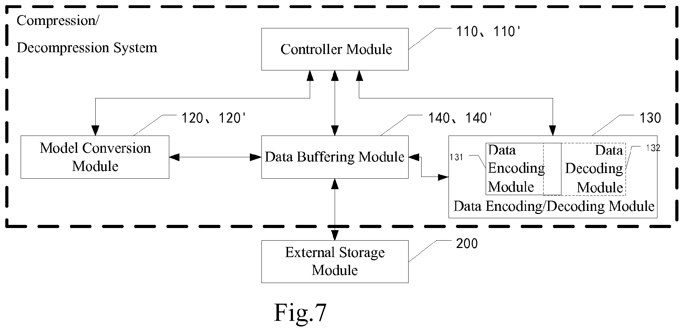

In a third exemplary embodiment of this disclosure, a compression/decompression system is provided. As shown in Fig. 7, the compression/decompression system of this embodiment has the compression apparatus of the first embodiment and the decompression apparatus of the second embodiment integrated therein. The compression apparatus and the decompression apparatus share a controller module (110, 110'), a model conversion module (120, 120') and a data buffering module (140, 140'). Furthermore, the data encoding module 131 in the compression apparatus and the data decoding module 132 in the decompression apparatus are integrated as data encoding/decoding module 130. In the data encoding and decoding module 130, the data encoding module 131 and the data decoding module 132 share a prediction unit 130a, a transformation unit 130b, a quantization unit 130c, and a depth automatic codec unit 130e. The entropy coding module 130d and the entropy decoding module 130d' exist as one module in the system, that is, it performs the encoding and decoding of data.

Hereinafter, the compression process and decompression process carried out by the compression/decompression system of this embodiment will be briefly explained.

Compression process

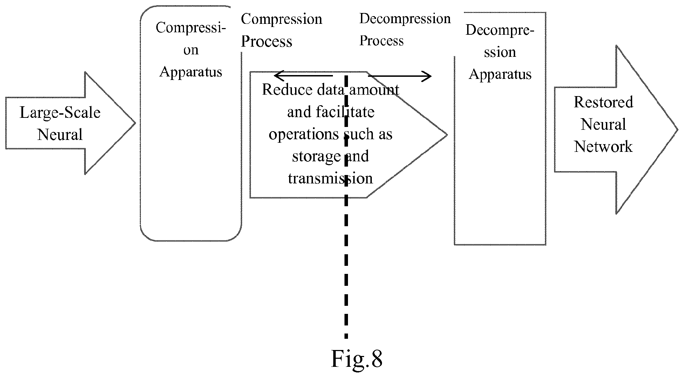

First, neural network data is stored in the external storage module 200. Next, the controller module 110 transmits control commands to the related modules to control the compression process. The data buffering module 140 reads the neural network data from the external storage module and buffers it. Then, the model conversion module 120 reads the neural network data from the data buffering module 140, converts it into video-like data, and then stores the video-like data into the data buffering module 140. The data encoding module 131 reads the video-like data from the data buffering module 140, and the data is compressed by passing through the prediction unit 130a, the transformation unit 130b, the quantization unit 130c, and the entropy decoding unit 130d. Subsequently, the data buffering module 140 reads the compressed data from the data encoding and decoding module 30. Finally, the data buffering module 140 writes the compressed result into the external storage module. The compressed result has greatly reduced amount of data and thus can be easily processed, such as stored and transmitted. Fig. 8 shows the compression process.

Decompression process

First, data to be decompressed is stored in the external storage module 200. The data is a result of compressing neural network data by means of prediction, transformation, quantization and entropy coding. In a subsequent process, the controller module 110 transmits control commands to the related modules to control the decompression process. The data buffering module 140 reads the data to be decompressed from the external storage module 200. Next, the data decoding module 132 reads the data to be decompressed from the data buffering module 140, and the data is decompressed into video-like data by passing through the entropy decoding unit 130d', the quantization unit 130c, the transformation unit 130b, and the prediction unit 130a. Then, the data buffering module 140 reads the video-like data from the data encoding and decoding module 30. Subsequently, the data buffering module 140 stores the video-like data into the model conversion module 120, which converts it into neural network data. Finally, the data buffering module 140 reads the neural network data from the model conversion module 120 and writes it into the external storage module 200. Thus, the neural network data is restored. Fig. 8 shows the decompression process.

At this point, the compression/decompression system for compressing/decompressing neural network data of this embodiment has been described.

IV. Second embodiment of compression apparatus

As mentioned above, neural network data includes neural network numerical data and neural network structural information. The neural network structural information includes the way of connection between neurons, the number of intra-layer neurons, and the type of the activation function, etc.

The neural network structural information cannot be compressed in the manner described in the first embodiment of the compression apparatus.

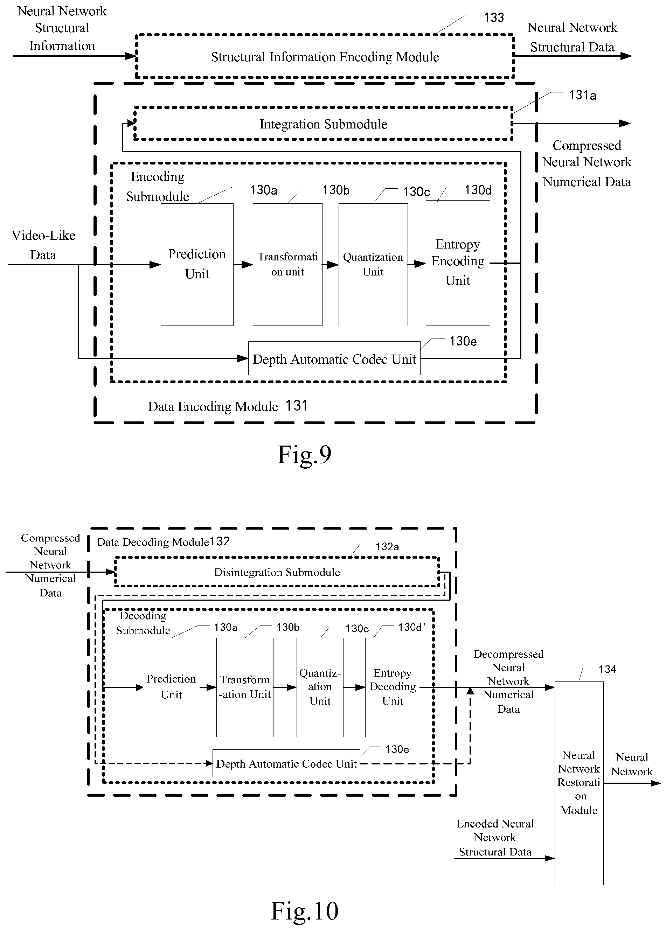

Fig. 9 is a schematic diagram that shows the structure of a second embodiment of a compression apparatus according to this disclosure. As shown in Fig. 9, the compression apparatus of this embodiment further comprises a structural information encoding module 133 configured to encode the neural network structural information to obtain neural network structural data.

In the structural information encoding module 133, the following method is used for the encoding.

(1) The number of intra-layer neurons in each layer of the neural network is recorded;
(2) The type of the activation function is encoded. For example, the Relu function is denoted with "1", and the Sigmoid function is denoted with "2"; and
(3) The connection relationship of neurons between adjacent layers is represented by an adjacent matrix. For example, "1" for the element in column j of row i of the adjacent matrix indicates that the $i^{th}$ neuron in proceeding layer is connected to the $j^{th}$ neuron in a succeeding layer, or else, they are not connected to each other.

The above method leads to an index structure (i.e., neural network structural data) with the layer numbers as index numbers, and the type number of the neuron activation function and the adjacent matrix as an index result.

The obtained neural network structural data can be compressed or stored together with the compressed neural network numerical data.

The model conversion module and data encoding module that are configured to compress the neural network numerical data in this embodiment are the same as the corresponding modules in the compression apparatus of the first embodiment and thus will not be described in detail herein.

The addition of the structural information encoding module in this embodiment makes it possible to process the neural network structural data and the neural network numerical data together.

V. Second embodiment of decompression apparatus

In a fifth embodiment of this disclosure, another decompression apparatus is provided.

Fig. 10 is a schematic diagram that shows the structure of a second embodiment of a decompression apparatus according to this disclosure. The difference between the decompression apparatus of this embodiment and that of the first embodiment is that the decompression apparatus of this embodiment further comprises a neural network restoration module 134 configured to decode neural network structural data to obtain neural network structural information, which, together with the restored neural network numerical data, is used to restore the neural network.

As mentioned above, the neural network structural information includes the way of connection between neurons, the number of intra-layer neurons, the type of the activation function, etc. The neural network structural data is a result of encoding the neural network structural information in the manner described in the second embodiment of the compression apparatus.

The addition of the neural network restoration module in this embodiment makes it possible to restore the neural network structural information from the neural network structural data, which, together with the restored neural network numerical data, is used to restore the neural network.

VI. Second embodiment of compression/decompression system

In a sixth exemplary embodiment of this disclosure, a compression/decompression system is provided. The compression/decompression system of this embodiment has the second embodiment of the compression apparatus and the second embodiment of the decompression apparatus integrated therein.

VI. Other embodiments

In other embodiments of this disclosure, there is provided a chip comprising a compression apparatus according to the first embodiment of the compression apparatus or the second embodiment of the compression apparatus, a decompression apparatus according to the first embodiment of the decompression apparatus or the second embodiment of the decompression apparatus, or a compression/decompression system according to the third embodiment.

The compression apparatus can be located on the chip in the following ways:

1. If the chip comprises a storage part, then the compression apparatus is located outside the storage part and configured to compress neural network data transmitted into the storage part, or
2. If the chip comprises an input port, then the compression apparatus is located outside the input port and configured to compress input neural network data, or
3. If the chip comprises a data transmitting end, then the compression apparatus is located at the data transmitting end and configured to compress neural network data to be transmitted.

The decompression apparatus can be located on the chip in the following ways:

1. If the chip comprises a storage part, then the decompression apparatus is located outside the storage part and configured to decompress compressed neural network data read out from the storage part, or
2. If the chip comprises an output port, then the decompression apparatus is located outside the output port and configured to decompress input compressed neural network data, or
3. If the chip comprises a data receiving end, then the decompression apparatus is located at the data receiving end and configured to decompress received compressed neural network data.

It is understandable to those skilled in the art that if the chip needs compression and decompression functions, the compression/decompression apparatus can be implemented inside the chip, which accelerates the interaction between the apparatus and the chip, as compared with arranging it outside the chip. However, if the user does not need a neural network chip but only wants a compression/decompression apparatus, it can certainly be used independently.

In other embodiments of this disclosure, there is provided a chip package structure that includes the above chip.

In other embodiments of this disclosure, this disclosure discloses a board card that includes the above chip package structure.

In an embodiment, this disclosure discloses an electronic apparatus that includes the above chip.

The electronic apparatus includes a data processing apparatus, a robot, a computer, a printer, a scanner, a tablet computer, an intelligent terminal, a mobile phone, a vehicle traveling data recorder, a navigator, a sensor, a camera, a cloud server, a camera, a video camera, a projector, a watch, an earphone, a mobile storage, a wearable device, transportation means, a household appliance, and/or a medical device.

The transportation means includes an airplane, a ship, and/or a vehicle. The household appliance includes a TV set, an air conditioner, a microwave oven, a refrigerator, an electric cooker, a humidifier, a washing machine, an electric lamp, a gas stove and a kitchen ventilator. The medical device includes a nuclear magnetic resonance instrument, a B-type ultrasonic instrument, and/or an electrocardiogram instrument.

At this point, the embodiments have been described in detail with reference to the attached drawings. Based on the above description, those skilled in the art should have had a clear understanding of the disclosed apparatus and system for compression and decompression of neural network data, chip, and electronic apparatus.

It should be noted that in the drawings or the description, an implementation way that is not shown or described is known to those skilled in the art. In addition, the elements and methods defined in the forgoing parts are not limited to the specific structures, shapes or ways mentioned in the embodiments, and can be easily changed or replaced by those skilled in the art. Here are some examples.

(1) In the above embodiments, the external storage module and the data buffering module are two separate modules. However, in other embodiments of this disclosure, the external storage module and the data buffering module may also exist as a whole-that is, the two modules are merged into one module with a storage function, which can also realize this disclosure.
(2) Regardless whether one, more or all of the aforementioned modules (e.g., the prediction submodule and transformation submodule) have a corresponding data buffering module respectively, or do not have a corresponding data buffering module but have an external storage module, this disclosure can be realized.
(3) This disclosure can be realized using a hard disk, a memory bank, or the like as the external memory module.
(4) In other embodiments of this disclosure, the external storage module may be replaced by an input-output module to input and output data. For example, this disclosure can still be realized if for the compression apparatus, the input-output module compresses input neural network data or outputs compressed neural network data, and for the decompression apparatus, it decompresses input neural network data or outputs decompressed neural network data.

In summary, this disclosure makes it possible to efficiently compress and decompress a large-scale neural network model, thereby greatly reducing the storage space of the neural network model and alleviating the pressure on transmission thereof. That is in line with the increasingly enlarging scale of neural networks, a trend in the era of "big data". Thus, this disclosure is applicable to various fields of neural network data and is well worth popularization.

It should also be noted that examples of parameters containing specific values are provided herein, but these parameters need not be equal to the corresponding values and can approximate the corresponding values within acceptable error tolerance or design constraints. Unless specifically described or unless for steps that must occur sequentially, the sequence of the above steps is not limited to those listed above but may be changed or rearranged according to the desired design. Moreover, the above embodiments can be used in combination with each other or with other embodiments for design and reliability considerations. That is, the technical features in different embodiments can be freely combined to form more embodiments.

The process or method depicted in the drawings may be performed by processing logic including hardware (e.g., circuit, dedicated logic, etc.), firmware, software (e.g., software carried on a non-transitory computer readable medium), or a combination of the two. Although processes or methods have been described above in terms of certain sequential operations, it should be understood that some of the operations can be performed in different sequences. Besides, some of the operations may be performed in parallel instead of in sequence.

Also, the functional units in embodiments of this disclosure may be integrated in one processing unit, or may exist physically independently, or two or more of them may be integrated in one unit. The above-mentioned integrated units can be realized in the form of hardware or software program modules.

The integrated unit, if realized in the form of a software program module and sold or used as a stand-alone product, may be stored in a computer readable memory. Based on this understanding, the essence of the technical solution of this disclosure (i.e., that part of this disclosure that contributes to the prior art), or all or part of the technical solution may be embodied in the form of a software product that is stored in a memory and involves several commands to cause a computer device (which may be a personal computer, a server, a network device, etc.) to perform all or part of the steps of the methods described in the various embodiments of this disclosure. The aforementioned memory includes: U disk, ROM (Read-Only Memory), RAM (Random Access Memory), mobile hard disk, magnetic disk, optical disk, and other media that can store program codes.

Each of the functional units/ modules may be hardware. For example, the hardware may be a circuit including a digital circuit, analog circuitry, etc. Physical implementation of the hardware structure includes but is not limited to physical devices which include but are not limited to transistors, memristors, and the like. The computing module in the computing device may be any suitable hardware processor such as a CPU, GPU, FPGA, DSP, ASIC, etc. The storage unit may be any suitable magnetic storage medium or magneto-optical storage medium such as RRAM, DRAM, SRAM, EDRAM, HBM, HMC, etc. The specific embodiments described above serve to further explain the purpose, technical solution and beneficial effects of this disclosure in detail. It should be understood that they are nothing but embodiments of this disclosure and are not intended to limit this disclosure. Any modifications, equivalent substitutions, improvements, etc. made within the spirit and principles of this disclosure should be deemed to be covered by the scope of protection of this disclosure.

**Claims**

1. A compression apparatus for neural network data, which comprises:

   a model conversion module (120) configured to convert neural network numerical data into video-like data; and
   a data encoding module (131) connected to the model conversion module (120) and configured to obtain a compression result by encoding the video-like data using a video encoding method.

2. The compression apparatus according to claim 1, wherein the video-like data is a series of integers within a preset range which are obtained by subjecting the initial neural network numerical data to conversion performed by the model conversion module, which correspond to the representation of all the pixels, and which together constitute data of the corresponding video.

3. The compression apparatus according to claim 2, wherein the model conversion module (120) converts the neural network numerical data into video-like data in one of the following two ways:

the first way is that a data range of the neural network numerical data, i.e., [-b, a], is determined, wherein a is a positive integer greater than or equal to the maximum value of the entire neural network numerical data, and -b is a negative integer less than or equal to the minimum value of the entire neural network model data;
the model conversion module (120) performs conversion according to the following formula:

$$I = \left\lceil \frac{(2^t - 1) \times (w + b)}{a + b} \right\rceil,$$

wherein $I$ is an integer within the interval [0, ($2^t$-1)], i.e., the representation of one pixel, $w$ is the real data value of the neural network numerical data in the range of [-b, a], and $t$ is a positive integer;
the second way is that for convolution neural network numerical data, the model conversion module (120) converts the weight and offset of each of convolution kernels in the convolution neural network numerical data and integrates integers obtained from the conversion of the weights and offsets to obtain data of a corresponding video frame, and then video-like data is obtained by combining video frame-like data obtained from the weights and offsets of the convolution kernels.

4. The compression apparatus according to claim 1, wherein the data encoding module (131) comprises:

an encoding submodule configured to obtain a data encoding result by encoding the video-like data using a video encoding method; and
an integration submodule configured to obtain a compression result by integrating the data encoding result and encoding process information.

5. The compression apparatus according to claim 4, wherein the encoding submodule comprises:

a prediction unit (130a) configured to perform predictive encoding using correlation between adjacent data of the video-like data;
a transformation unit (130b) configured to perform orthogonal transformation encoding on the video-like data processed by the prediction unit to compress the data;
a quantization unit (130c) configured to perform quantization encoding on the video-like data processed by the transformation unit and reduce the encoding length of the data without reducing the quality of the data; and
an entropy encoding unit (130d) configured to perform code rate compression encoding on the video-like data processed by the quantization unit using statistical characteristics of the data to reduce data redundancy.

6. The compression apparatus according to claim 4, wherein the prediction unit (130a), transformation unit (130b), quantization unit (130c), and entropy encoding unit (130d) share one data buffering unit or correspond respectively to a data buffering unit.

7. The compression apparatus according to claim 4, wherein the encoding submodule comprises:

a depth automatic encoder unit configured to further encode the video-like data output from the model conversion module and use outputs of a hidden layer as the encoding result,
wherein the depth automatic encoder unit trains the video-like data as a training input and an ideal output using a method of minimizing reconstruction errors so that the output becomes substantially the same as the input video-like data.

8. The compression apparatus according to any one of claims 1-7, further comprising:
a structural information encoding module configured to obtain neural network structural data by encoding neural network structural information.

9. The compression apparatus according to claim 8, wherein the neural network numerical data includes weight data and offset data of the neural network,
the neural network structural information includes the way of connection between neurons, the number of intra-layer neurons, and the type of the activation function,
the structural information encoding module encodes the neural network structural information in the following manner so as to obtain an index structure with the layer numbers as index numbers, and the type number of the neuron activation function and the adjacent matrix as an index result, i.e., the neural network structural data: recording the number of intra-layer neurons in each layer of the neural network; encoding the type of the activation function; and representing the connection relationship of neurons between adjacent layers by an adjacent matrix .

10. The compression apparatus according to any one of claims 1-7, further comprising:

a data buffering module (140) configured to buffer the neural network numerical data; and
a controller module (110) connected to the data buffering module (140), the model conversion module (120) and the data encoding module (131) and configured to transmit control commands to perform the following operations:

transmitting a data reading command, to the data buffering module (140), which causes the data buffering module (140) to request the neural network numerical data from the outside and buffer it;
transmitting a data reading command, to the model conversion module (120), which causes the model conversion module (120) to read the neural network numerical data from the data buffering module (140);
transmitting a data conversion command, to the model conversion module (120), which causes the model conversion module (120) to convert the read neural network numerical data into video-like data;
transmitting a data reading command, to the data buffering module (140), which causes the data buffering module (140) to request the video-like data from the model conversion module (120) and buffer it;
transmitting a data reading command, to the data encoding module (131), which causes the data encoding module (131) to read the video-like data from the data buffering module (140);
transmitting a data encoding command, to the data encoding module (131), which contains encoding method information and causes the data encoding module (131) to encode the video-like data by making use of corresponding units employing the encoding method, thus obtaining a data encoding result;
transmitting an integration command, to the data encoding module (131), which causes the data encoding module (131) to integrate the data encoding result with encoding process information to lead to a compression result; and
transmitting a data buffering command, to the data buffering module (140), which causes the data buffering module (140) to obtain the compression result from the data encoding module (131) and buffer it.

11. A decompression apparatus for neural network data, which comprises:

a data decoding module (132) configured to obtain a compression result and decode the compression result using a video decoding method corresponding to the compression result; and
a model conversion module (120) connected to the data decoding module (132) and configured to restore neural network numerical data from the decoded video-like data.

12. The decompression apparatus for neural network data according to claim 11, wherein the data decoding module (132) comprises:

a disintegration submodule configured to disintegrate the compression result into a data encoding result and encoding process information; and
a decoding submodule configured to extract encoding method information from the encoding process information and decode the data encoding result using a decoding method corresponding to the encoding method information, thus obtaining video-like data.

13. The decompression apparatus for neural network data according to claim 11, wherein the model conversion module (120) restores neural network numerical data from the decoded video-like data in one of the following two ways:

the first way is that a data range of the neural network numerical data is determined to be [-b, a], wherein a is a positive integer greater than or equal to the maximum value of the entire neural network numerical data, and -b is a negative integer less than or equal to the minimum value of the entire neural network model data;
the model conversion module (120) restores the neural network numerical data according to the following formula:

$$W = \frac{(a + b) \times I}{2^t - 1} - b$$

,

wherein, W is the real data value of the neural network numerical data in the range of [-b, a], I is video-like data, which is an integer within the interval [0, ($2^t$-1)], and t is a positive integer;
the second way is that for convolution neural network numerical data, the model conversion module (120) converts data of corresponding video frames in the video-like data by converting each frame into the weight and offset of one of convolution kernels of the convolution neural network, and integrates the converted data of all the frames to obtain overall information of the weight and offset of each convolution kernels of the convolution neural network, thereby restoring the neural network numerical data.

14. The decompression apparatus according to any one of claims 11-13, further comprising:

a neural network restoration module configured to decode neural network structural data to obtain neural network structural information and restore the neural network using the neural network structural information and the restored neural network numerical data,
wherein the neural network numerical data are weight data and offset data of the neural network; and the neural network structural information includes the way of connection between neurons, the number of intra-layer neurons, and the type of the activation function, the neural network structural data being data resulting from encoding the neural network structural information.

15. The decompression apparatus according to any one of claims 11-13, further comprising:

a data buffering module (140) configured to buffer a compression result; and
a controller module (110) connected to the model conversion module (120), the data decoding module (132) and the data buffering module (140) and configured to transmit them control commands to perform the following operations:

transmitting a data reading command, to the data buffering module (140), which causes the data buffering module (140) to request the compression result from the outside and buffer it;
transmitting a data reading command, to the data decoding module (132), which causes the data decoding module (132) to read the compression result from the data buffering module (140);
transmitting a disintegration command, to the data decoding module (132), which causes the data decoding module (132) to decode the compression result to obtain encoding process information and a data compression result;
transmitting a data reading command, to the data decoding module (132), which causes the data decoding module (132) to read the encoding process information;
selecting a decoding command according to the encoding process information;
transmitting a decoding command, to the data encoding and decoding module (132), which causes the data encoding and decoding module (132) to decompress the data compression to obtain video-like data;
transmitting a data reading command, to the data buffering module (140), which causes the data buffering module (140) to read the video-like data from the data decoding module (132) and buffer it;
transmitting a data reading command, to the model conversion module (120), which causes the model conversion module (120) to read the video-like data from the data buffering module (140); and
transmitting a data conversion command, to the model conversion module (120), which causes the model conversion module (120) to convert the video-like data into neural network numerical data.

16. A system for compression/decompression of neural network data, which comprises:

a compression apparatus which is the compression apparatus according to any one of claims 1-10; and
a decompression apparatus which is the decompression apparatus according to any one of claims 11-15.

17. The system according to claim 16, wherein the compression apparatus is the compression apparatus according to claim 9, and
the decompression apparatus is the decompression apparatus according to claim 14,

EP 3 564 864 A1

wherein the compression apparatus and the decompression apparatus share the data buffering module (140), the controller module (110), and the model conversion module (120).

18. A chip, which comprises:

the compression apparatus according to any one of claims 1-10; and/or
the decompression apparatus according to any one of claims 11-15; and/or
the compression/decompression system according to claim 16 or 17,
wherein for the compression apparatus or the compression apparatus in the system,

the chip comprises a storage unit, and the compression apparatus is arranged outside the storage unit and configured to compress neural network data transmitted into the storage unit; or
the chip comprises an input port, and the compression apparatus is arranged outside the input port and configured to compress input neural network data; or
the chip comprises a data transmitting end, and the compression apparatus is arranged at the data transmitting end and configured to compress neural network data to be sent;

and/or, for the decompression apparatus or the decompression apparatus in the system,

the chip comprises a storage unit, and the decompression apparatus is arranged outside the storage unit and configured to decompress compressed neural network data that is read out from the storage unit; or
the chip comprises an output port, and the decompression apparatus is arranged outside the output port and configured to decompress input compressed neural network data; or
the chip comprises a data receiving end, and the decompression apparatus is arranged at the data receiving end and configured to decompress received compressed neural network data.

19. An electronic apparatus, which comprises the chip according to claim 18.

Compression Apparatus

Controller
Module ⌐110

Model Conversion
Module ⌐120

Data Buffering
Module ⌐140

Data Encoding
Module ⌐131

External Storage
Module ⌐200

Fig.1

Data Encoding Module131

⌐131a
Integration Submodule

Encoding Submodule

⌐130a Prediction Unit

⌐130b Transfor-mation Unit

⌐130c Quantization Unit

⌐130d Entropy Encoding Unit

Depth Automatic Codec Unit ⌐130e

Fig.2

Transmit a data reading command, to the data buffering module, which causes the data buffering module to request the neural network data from the external storage module and buffer it — S302

Transmit a data reading command, to the model conversion module, which causes the model conversion module to read the neural network data from the data buffering module — S304

Transmit a data conversion command, to the model conversion module, which causes the model conversion module to convert the read neural network data into video-like data — S306

Transmit a data reading command, to the data buffering module, which causes the data buffering module to request the video-like data from the model conversion module and buffer it — S308

Transmit a data reading command, to the data encoding module, which causes the data encoding module to read the video-like data from the data buffering module — S310

Transmit a data encoding command, to the data encoding module, that contains encoding method information and causes the data encoding module to encode the video-like data using units corresponding to the encoding method, thus obtaining a data encoding result — S312

Transmit an integration command, to the data encoding module, which causes the data encoding module to integrate the data encoding result with encoding process information to obtain a compression result — S314

Transmit a data buffering command, to the data buffering module, which causes the data buffering module to obtain the compression result from the data encoding module and buffer it — S316

Transmit a data storage command, to the data buffering module, which causes the data buffering module to store the compression result in the external storage module — S318

Fig.3

Decompression Apparatus

Controller Module ⌐ 110'

Model Conversion Module ⌐ 120'

Data Buffering Module ⌐ 140'

Data Decoding Module ⌐ 132

External Storage Module ⌐ 200

## Fig.4

Data Decoding Module 132

Disintegration Submodule ⌐ 132a

Decoding Submodule

Prediction Unit ⌐ 130a

Transfor-mation Unit ⌐ 130b

Quantizati-on Unit ⌐ 130c

Entropy Decoding Unit ⌐ 130d'

Depth Automatic Codec Unit ⌐ 130e

## Fig.5

Transmit a data reading command, to the data buffering module, which causes the data buffering module to request the compression result from the external storage module and buffer it — S602

Transmit a data reading command, to the data decoding module, which causes the data decoding module to read the compression result from the data buffering module — S604

Transmit a disintegration command, to the data decoding module, which causes the data decoding module to decode the compression result to obtain encoding process information and a data compression result — S606

Transmit a data reading command, to the data decoding module, to read the encoding process information from the data decoding module — S608

Select a decoding command according to the encoding process information — S610

Transmit a decoding command, to the data encoding and decoding module, which causes the data encoding and decoding module to decompress the data compression result in the compression result to obtain video-like data — S612

Transmit a data reading command, to the data buffering module, which causes the data buffering module to read the video-like data from the data decoding module and buffer it — S614

Transmit a data reading command, to the model conversion module, which causes the model conversion module to read the video-like data from the data buffering module — S616

Transmit a data conversion command, to the model conversion module, which causes the model conversion module to convert the video-like data into neural network data — S618

Transmit a data reading command, to the data buffering module, which causes the data buffering module to request the neural network data from the model conversion module and buffer it — S620

Transmit a data writing command, to the data buffering module, which causes the data buffering module to write the neural network data into the external storage module — S622

Fig.6

Compression/
Decompression System

Controller Module — 110、110'

Model Conversion Module — 120、120'

Data Buffering Module — 140、140'

Data Encoding Module 131

Data Decoding Module 132

Data Encoding/Decoding Module — 130

External Storage Module — 200

Fig.7

Compression
Apparatus

Compression
Process

Decompression
Process

Decompre-
ssion
Apparatus

Large-Scale
Neural

Reduce data amount
and facilitate
operations such as
storage and
transmission

Restored
Neural
Network

Fig.8

Neural Network
Structural
Information

Structural Information Encoding Module ⌐ 133

Neural Network
Structural Data

⌐ 131a
Integration Submodule

Compressed
Neural Network
Numerical Data

Encoding
Submodule

┌ 130a  ┌ 130b  ┌ 130c  ┌ 130d

Video-Like
Data

| Prediction Unit | Transformati on unit | Quantization Unit | Entropy Encoding Unit |

┌ 130e
Depth Automatic Codec Unit

Data Encoding Module 131

Fig.9

Compressed
Neural
Network
Numerical
Data

Data Decoding Module 132

┌ 132a
Disintegration Submodule

Decoding
Submodule

┌ 130a  ┌ 130b  ┌ 130c  ┌ 130d'

| Prediction Unit | Transform -ation Unit | Quantiz- ation Unit | Entropy Decoding Unit |

Decompressed
Neural
Network
Numerical
Data

┌ 134

┌ 130e
Depth Automatic Codec Unit

Neural
Network
Restorati
-on
Module

Neural
Network

Encoded Neural
Network
Structural Data

Fig.10

<table>
<tr><td colspan="2"><b>INTERNATIONAL SEARCH REPORT</b></td><td colspan="2">International application No.<br>PCT/CN2017/119364</td></tr>
</table>

**A. CLASSIFICATION OF SUBJECT MATTER**

G06N 3/06 (2006.01) i; H04N 7/24 (2011.01) i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

USTXT; CNTXT; CNKI; GOOGLE: 类视频, 量化, 预测, 人工神经网络, 神经网络, 压缩, 编码, video, prediction, quantization, compress+, encode, artificial, neural network

**C. DOCUMENTS CONSIDERED TO BE RELEVANT**

| Category* | Citation of document, with indication, where appropriate, of the relevant passages | Relevant to claim No. |
|---|---|---|
| X | HAN, Song et al., "Deep Compression: Compressing Deep Neural Networks with Pruning, Trained Quantization and Huffman Coding", ICLR, 15 February 2016 (15.02.2016), pages 1-5 | 1, 2, 4, 8, 10-12, 14-19 |
| A | GONG, Yunchao et al., "Compressing Deep Convolutional Networks Using Vector Quantization", ICLR, 18 December 2014 (18.12.2014), entire document | 1-19 |
| A | 傅彦等, "快速神经网络无损压缩方法研究", "电子科技大学学报", 36(6), 31 December 2007 (31.12.2007), entire document, (FU, Yan et al., "Lossless Data Compression with Neural Network Based on Maximum Entropy Theory", "Journal of University Electronic Science and Technology of China") | 1-19 |
| A | CN 105184362 A (INSTITUTE OF AUTOMATION, CHINESE ACADEMY OF SCIENCES), 23 December 2015 (23.12.2015), entire document | 1-19 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 March 2018 | 19 March 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>GAO, Weiwei<br><br>Telephone No. (86-10) 62089149 |

Form PCT/ISA/210 (second sheet) (July 2009)

## INTERNATIONAL SEARCH REPORT
### Information on patent family members

| International application No. |
| --- |
| PCT/CN2017/119364 |

| Patent Documents referred in the Report | Publication Date | Patent Family | Publication Date |
| --- | --- | --- | --- |
| CN 105184362 A | 23 December 2015 | CN 105184362 B | 02 February 2018 |

Form PCT/ISA/210 (patent family annex) (July 2009)